Europäisches Patentamt

European Patent Office

Office européen des brevets

(19)

(11) **EP 0 620 081 B1**

(12) **EUROPÄISCHE PATENTSCHRIFT**

(45) Veröffentlichungstag und Bekanntmachung des Hinweises auf die Patenterteilung:
01.10.1997 Patentblatt 1997/40

(51) Int. Cl.$^6$: **B23Q 17/22**

(21) Anmeldenummer: 94103023.1

(22) Anmeldetag: 01.03.1994

(54) **Verfahren zur Positionierung eines einen Bezugspunkt aufweisenden Maschinenelementes, vorzugsweise eines Bearbeitungswerkzeuges, relativ zu einem Referenzpunkt, vorzugsweise zu einem Anschlag oder einer Auflagefläche**

Method of positioning a machine element, preferably a tool, which features a reference point, relative to a datum point, preferably on a stop or support surface

Méthode de positionnement d'un élément d'une machine, de préférence un outil, qui a un point de référence, par support à un point de référence fixe, de préférence à une butée ou une surface de support

(84) Benannte Vertragsstaaten:
**BE DE FR GB IT**

(30) Priorität: **10.04.1993 DE 4311861**

(43) Veröffentlichungstag der Anmeldung:
**19.10.1994 Patentblatt 1994/42**

(73) Patentinhaber:
**Michael Weinig Aktiengesellschaft
D-97941 Tauberbischofsheim (DE)**

(72) Erfinder: **Mott, Heinz
D-97941 Tauberbischofsheim (DE)**

(74) Vertreter: **Kohl, Karl-Heinz et al
Patentanwälte
Dipl.-Ing. A.K. Jackisch-Kohl
Dipl.-Ing. K.H. Kohl
Stuttgarter Strasse 115
70469 Stuttgart (DE)**

(56) Entgegenhaltungen:
**DE-A- 2 060 044          DE-A- 3 903 906
GB-A- 2 059 825**

# Beschreibung

Die Erfindung betrifft ein Verfahren zur Positionierung eines einen Bezugspunkt aufweisenden Maschinenelementes relativ zu einem Referenzpunkt nach dem Oberbegriff des Anspruches 1.

Bei Bearbeitungsmaschinen ist es bekannt, das jeweilige Bearbeitungswerkzeug als Maschinenelement relativ zu einem Anschlag oder zu einer Auflagefläche zu positionieren, um ein Werkstück in der erforderlichen Weise zu bearbeiten. So wird beispielsweise bei Holzbearbeitungsmaschinen das Bearbeitungswerkzeug so in bezug auf einen Anschlag eingestellt, daß das Holz nach der Bearbeitung eine vorgegebene Breite hat. Die Einstellung der Bearbeitungswerkzeuge bzw. ihrer Spindeln ist aufwendig. Wenn die Bearbeitungswerkzeuge gewechselt werden, muß stets von neuem eine sogenannte Nullung der Positioniereinrichtungen in der Arbeitsstellung vorgenommen werden.

Beim gattungsgemäßen Verfahren (DE-A-39 03 906) wird ein Anschlag relativ zu einem Werkzeug eingestellt. Der Anschlag sitzt auf einer Verstellspindel, mit welcher der Anschlag in der Höhe verstellt werden kann. Auf der Spindel sitzt eine elektronische Meßeinrichtung, welche mit einem Anzeigegerät verbunden ist. Bei Verstellung der Spindel werden Impulse dem Anzeigegerät zugeführt. Der Verstellweg der Spindel und damit des Anschlages wird intern mit dem Durchmesser des Werkzeuges verarbeitet. Mit einer Eingabeeinrichtung wird der entsprechende Durchmesserwert eingegeben und angezeigt. Aus dem Verstellweg der Spindel und dem Durchmesser des Werkzeuges wird die Frästiefe des Werkzeuges berechnet und angezeigt. Dieses Verfahren ist aufwendig und damit teuer sowie umständlich.

Der Erfindung liegt die Aufgabe zugrunde, das gattungsgemäße Verfahren so auszubilden, daß das Maschinenelement bei einfacher konstruktiver Ausbildung schnell und genau in die erforderliche Position verstellt werden kann.

Diese Aufgabe wird beim gattungsgemäßen Verfahren erfindungsgemäß mit den kennzeichnenden Merkmalen des Anspruches 1 gelöst.

Beim erfindungsgemäßen Verfahren wird das Maschinenelement zunächst so in bezug auf den Referenzpunkt eingestellt, daß der Bezugspunkt des Maschinenelementes den vorgegebenen Abstand vom Referenzpunkt hat. Dieser Abstand entspricht dem Bearbeitungsmaß, das mit der ersten Positionsanzeige angezeigt wird. Der Anwender des Verfahrens kann somit mit der ersten Positionsanzeige einfach das Bearbeitungsmaß erkennen. Anschließend wird das Anzeigegerät so umgestellt, daß die erste Positionsanzeige abgeschaltet und die zweite Positionsanzeige eingeschaltet wird. Nunmehr wird das Maschinenelement erneut relativ zum Referenzpunkt verstellt. Der Verstellweg wird unmittelbar mit der zweiten Positionsanzeige angezeigt. Das Maschinenelement wird so weit verschoben, bis sein wirksamer Teil den vorgegebenen Abstand vom Referenzpunkt hat. Anhand der zweiten Positionsanzeige kann der Anwender des Verfahrens das Maschinenelement einfach und genau verstellen. Sobald mit der zweiten Positionsanzeige der Abstand angezeigt wird, kann er die Verstellung des Maschinenelementes beenden. An den jeweiligen Positionsanzeigen kann der Anwender des erfindungsgemäßen Verfahrens jederzeit den vorgegebenen Abstand sowie den Abstand des Bezugspunktes des Maschinenelementes von seinem wirksamen Teil erkennen. Unter Bezugspunkt sowie unter Referenzpunkt können Achsen oder auch Flächen verstanden werden. Als wirksamer Teil kann beispielsweise ein Außenrand, eine Umfangsfläche, ein Arbeitsdurchmesser eines Werkzeuges oder der Flugkreis von Messern eines Bearbeitungswerkzeuges verstanden werden. Das Anzeigegerät kann mechanisch arbeiten, so daß es kostengünstig und problemlos im Einsatz ist. Mit dem erfindungsgemäßen Verfahren können vom Anwender sehr einfach unterschiedlich große Maschinenelemente mit unterschiedlichen wirksamen Teilen eingesetzt und auf den vorgegebenen Abstand eingestellt werden.

Mit dem erfindungsgemäßen Verfahren lassen sich beispielsweise Anschläge, Werkzeuge, Vermessungseinrichtungen und dergleichen mühelos genau positionieren.

Weitere Merkmale der Erfindung ergeben sich aus den weiteren Ansprüchen, der Beschreibung und der Zeichnung.

Die Erfindung wird anhand eines in der Zeichnung dargestellten Ausführungsbeispieles näher erläutert. Es zeigen:

Fig. 1 in schematischer Darstellung eine Grundeinstellung eines Bearbeitungswerkzeuges,

Fig. 2 in einer Darstellung entsprechend Fig. 1 die Einstellung des Bearbeitungswerkzeuges auf das Bearbeitungsmaß.

Bei Bearbeitungsmaschinen, insbesondere bei Holzbearbeitungsmaschinen, wie Kehlmaschinen, werden die Werkstücke, vorzugsweise Hölzer, an ihren Längsseiten mit Bearbeitungswerkzeugen bearbeitet. Um ein gewünschtes Bearbeitungsmaß zu erzielen, müssen die Bearbeitungswerkzeuge exakt eingerichtet werden. Die Werkstücke werden an den Bearbeitungswerkzeugen vorbeigeführt und liegen hierbei an einem Anschlag 1 an. In den Zeichnungen ist der Fall dargestellt, daß ein Werkstück 2 in Transportrichtung 3 am Bearbeitungswerkzeug 4 vorbeigefördert wird. Das Werkstück 2 liegt hierbei auf einer (nicht dargestellten) Auflage auf und wird längs des Anschlages 1 in Transportrichtung 3 geführt. Auf der dem Anschlag 1 gegenüberliegenden Seite wird das Werkstück 2 durch das Bearbeitungswerkzeug 4 bearbeitet. Es kann beispielsweise ein Profilierwerkzeug sein, das drehfest auf einer Spindel 5 sitzt.

Die Spindel 5 kann in einer Bearbeitungsmaschine senkrecht oder horizontal oder auch schräg angeordnet sein, je nachdem, wie das entsprechende Werkstück 2 bearbeitet werden soll. Im dargestellten Ausführungsbeispiel erstreckt sich die Spindel 5 senkrecht zur Transportrichtung 3 und in vertikaler Richtung. Liegt die Spindel 5 horizontal über dem zu bearbeitenden Werkstück, dann ist als Anschlag die Auflagefläche für das Werkstück anzusehen.

Mit der im folgenden beschriebenen Einrichtung und Verfahrensweise kann das Bearbeitungsmaß h in einfacher Weise und schnell exakt eingestellt werden. Zunächst wird das Bearbeitungswerkzeug 4 in eine Grundstellung gebracht. Hierzu wird mit Hilfe von genau vermessenen Meßringen, die auf die Spindel 5 gesteckt werden, ein bestimmter Grundabstand zum Anschlag 1 eingestellt. Dieser Abstandswert wird dann an einer Positionsanzeige 9 eines Anzeigegerätes 8 eingestellt. Eine andere Positionsanzeige 10 des Anzeigegerätes 8 wird auf Null gestellt. Diese Grundeinstellung der Spindel 5 wird nur einmal vorgenommen. In dieser Grundstellung hat die Achse 6 der Spindel 5 den Grundabstand vom Anschlag 1. Um diese Grundstellung zu erreichen, wird die Spindel 5 in Richtung der eingezeichneten Pfeile 7 senkrecht zum Anschlag 1 so verstellt, bis die Spindelachse 6 den erforderlichen Abstand vom Anschlag 1 hat. Die Spindel 5 sitzt auf einer (nicht dargestellten) Verschiebeeinrichtung, wie einem Schlitten, mit der sie einfach relativ zum Anschlag 1 verstellt werden kann. Diese Verstelleinrichtung wird nach der beschriebenen Grundeinstellung der Spindel 5 mit dem Anzeigegerät 8 verbunden, das zwei Positionsanzeigen 9 und 10 aufweist. Sie können wahlweise über einen Schalter 11 mit der Verstelleinrichtung der Spindel 5 verbunden werden, so daß nur eine der beiden Positionsanzeigen 9 oder 10 einen entsprechenden Verstellweg der Spindel 5 anzeigt.

Ausgehend von der beschriebenen Grundeinstellung wird die Spindel 5 auf das gewünschte Bearbeitungsmaß h eingestellt. Die Positionsanzeige 9 zeigt diesen Abstand h der Spindelachse 6 vom Anschlag 1 an, der im Ausführungsbeispiel 80 mm beträgt. Da der Flugkreis 12 der (nicht dargestellten) Schneidmesser am Umfang des Bearbeitungswerkzeuges 4 kleineren Abstand vom Anschlag 1 hat, muß nunmehr das Bearbeitungswerkzeug 4 so weit vom Anschlag 1 entfernt werden, daß mit den Schneidmessern das Werkstück 2 auf das Maß h bearbeitet werden kann. Diese Verstellung des Bearbeitungswerkzeuges 4 läßt sich mühelos und einfach vornehmen.

Der Schalter 11 des Anzeigegerätes 8 wird umgestellt, so daß bei der Verschiebung der Spindel 5 lediglich die Positionsanzeige 10, nicht jedoch die Positionsanzeige 9 verstellt wird. Der in der Positionsanzeige 9 angezeigte Wert, das Bearbeitungsmaß h, bleibt somit sichtbar.

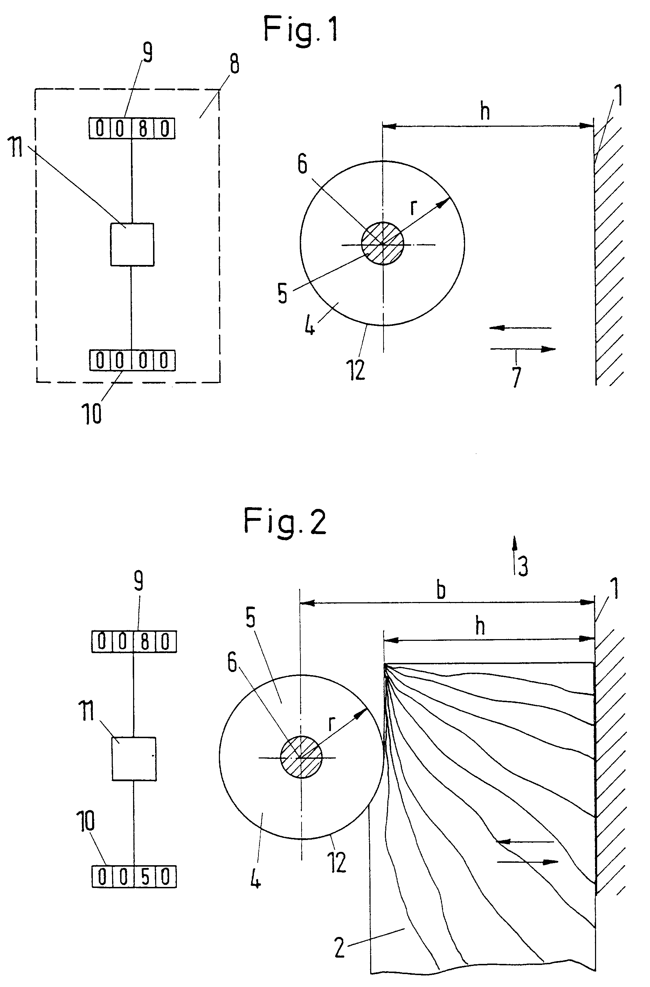

Da die Spindelachse 6 den Abstand h zum Anschlag 1 hat, muß nunmehr das Bearbeitungswerkzeug 4 lediglich um den Radius r des Flugkreises 12 der Schneidmesser vom Anschlag 1 entfernt werden. Da der Radius r des Flugkreises des Bearbeitungswerkzeuges 4 bekannt ist, muß die Bedienungsperson die Spindel 5 lediglich so weit verstellen, bis in der Positionsanzeige 10 der Radius des Flugkreises 12 unmittelbar angezeigt wird. Im dargestellten Ausführungsbeispiel beträgt dieser Flugkreisradius r 50 mm. Sobald die Positionsanzeige 10, die in der Grundeinstellung gemäß Fig. 1 auf Null gestellt war, den Wert 50 anzeigt, hat das Bearbeitungswerkzeug 4 seine exakte Lage erreicht. An der Positionsanzeige 10 läßt sich der entsprechende Wert mühelos ablesen, so daß die Bedienungsperson das Bearbeitungswerkzeug 4 ohne Mühe in die genaue Lage verstellen kann. In dieser sogenannten Einrichtstellung hat nun der Flugkreis 12 des Bearbeitungswerkzeuges 4 den gewünschten Abstand h. Nunmehr kann das zu bearbeitende Werkstück 2 in Transportrichtung 3 am Bearbeitungswerkzeug 4 vorbeitransportiert werden. Es wird dabei von den Schneidmessern des Bearbeitungswerkzeuges 4 auf das Maß h, also auf 80 mm, bearbeitet.

In der Einrichtung gemäß Fig. 2 hat die Spindelachse 6 den Abstand b vom Anschlag 1. Dieser Abstand b ergibt sich aus der Beziehung b = h + r .

Sollen nun Werkstücke 2 auf ein Bearbeitungsmaß h von beispielsweise nur 60 mm gebracht werden, dann ist die hierzu erforderliche Einstellung des Bearbeitungswerkzeuges 4 sehr einfach und dennoch genau durchzuführen. Der Schalter 11 des Anzeigegerätes 8 wird wieder so umgeschaltet, daß die Positionsanzeige 10 bei der Verstellung des Bearbeitungswerkzeuges 4 nicht verstellt wird, sondern lediglich die Positionsanzeige 9. Soll beispielsweise das Maß h nicht mehr 80 mm, sondern nur 60 mm betragen, dann wird das Bearbeitungswerkzeug 4, ausgehend von der Stellung gemäß Fig. 2, in Richtung auf den Anschlag 1 so weit verstellt, bis an der Positionsanzeige 9 der Wert 60 erscheint. Dann hat auch der Flugkreis 12 des Bearbeitungswerkzeuges 4 den Abstand von 60 mm vom Anschlag 1. Es kann darum anschließend sofort das Werkstück 2 am Bearbeitungswerkzeug 4 vorbeigeführt werden, wobei es auf das neue Maß h von 60 mm bearbeitet wird.

Anhand der Positionsanzeige 9 läßt sich sehr genau feststellen, wenn das neue Maß h erreicht ist. Die andere Positionsanzeige 10 wird bei der Einstellung der Spindel 5 nicht verstellt, so daß sie weiterhin den Radius r von 50 mm des Flugkreises 12 des Bearbeitungswerkzeuges 4 anzeigt.

Auf diese Weise läßt sich das Bearbeitungswerkzeug 4 einfach und hochgenau in die jeweilige, zur Herstellung des Bearbeitungsmaßes h erforderliche Position verstellen.

Soll das Bearbeitungsmaß h mit einem Bearbeitungswerkzeug 4 mit einem anderen Flugkreisradius hergestellt werden, muß das Werkzeug wiederum entsprechend verstellt werden. Hat dieses andere Werkzeug 4 beispielsweise einen Flugkreisradius von nur 30 mm, dann muß das Werkzeug näher zum Anschlag 1 verstellt werden, damit das zu bearbeitende Werkstück 2 das erforderliche Bearbeitungsmaß h von beispielsweise 80 mm erhält. Der Schalter 11 des Anzeigegerätes 8 wird so umgestellt, daß bei der erforderlichen Verstellung des Bearbeitungswerkzeuges 4 die Positionsanzeige 10 verstellt wird. In der Positionsanzeige 9 wird darum weiterhin das Bearbeitungsmaß h von 80 mm angezeigt. Wird nun die Spindel 5 aus der Stellung gemäß Fig. 2 mit dem neuen Werkzeug in Richtung auf den Anschlag 1 verstellt, dann ändert sich der in der Positionsanzeige 10 angezeigte Wert um das Maß des Verstellweges der Spindel 5. Da der neue Flugkreisradius r nicht mehr 50, sondern nur noch 30 mm beträgt, muß somit die Spindel 5 so weit in Richtung auf den Anschlag 1 verschoben werden, bis in der Positionsanzeige 10 der neue Flugkreisradiuswert 30 angezeigt wird. Dies entspricht einem Verstellweg der Spindel 5 um 20 mm. Sobald in der Positionsanzeige der neue Wert 30 erscheint, hat die Spindel 5 ihre exakte Lage erreicht. Nunmehr kann das Werkstück 2 am Bearbeitungswerkzeug 4 vorbeigeführt werden, wobei es auch mit dem kleineren Werkzeug auf das Maß h von 80 mm bearbeitet wird.

Wird das Bearbeitungswerkzeug mit dem kleineren Flugkreisradius von 30 mm auf die Spindel 5 aufgesetzt, dann wird nach Umstellen des Schalters 11 auf die Positionsanzeige 10 die Spindel 5 vom Anschlag 1 so weit entfernt, bis in der Positionsanzeige 10 der Wert 30 erscheint. Dann hat der Flugkreis des Bearbeitungswerkzeuges wiederum den erforderlichen Abstand h von 80 mm vom Anschlag 1.

In gleicher Weise kann die Verstellung auch mit im Flugkreisdurchmesser größeren Bearbeitungswerkzeugen einfach vorgenommen werden. Soll das Bearbeitungsmaß h weiterhin bei beispielsweise 80 mm liegen, muß in diesem Falle der Abstand zwischen dem Bearbeitungswerkzeug 4 und dem Anschlag 1 vergrößert werden. Wird das neue Bearbeitungswerkzeug auf die Spindel 5 aufgesetzt, dann wird zunächst mit dem Schalter 11 die Positionsanzeige 10 eingeschaltet. Nunmehr wird das Bearbeitungswerkzeug 4 so weit verschoben, bis in der Positionsanzeige 10 der Flugkreisradius des neuen Bearbeitungswerkzeuges erscheint. Beträgt er beispielsweise 70 mm, dann wird die Spindel 5 so weit vom Anschlag 1 entfernt, bis in der Positionsanzeige 10 der Wert 70 angezeigt wird. Dann hat der Flugkreisdurchmesser 12 den erforderlichen Abstand h von im Ausführungsbeispiel 80 mm vom Anschlag 1. Anschließend kann das Werkstück 2 am Bearbeitungswerkzeug 4 vorbeigeführt werden, wobei es auch mit dem größeren Werkzeug auf das Maß h gebracht wird.

Wird das im Flugkreisdurchmesser größere Werkzeug auf die Spindel 5 in der Stellung gemäß Fig. 2 gesteckt, dann wird mit dem Schalter 11 wiederum die Positionsanzeige 10 eingeschaltet. Wegen des größeren Flugkreisdurchmessers muß die Spindel 5 in einen größeren Abstand zum Anschlag 1 gebracht werden. In der Positionsanzeige 10 wird zunächst noch der ursprünglich eingestellte Wert 50 angezeigt. Da der neue Flugkreisdurchmesser 70 mm beträgt, muß somit die Spindel 5 um 20 mm weiter vom Anschlag 1 entfernt werden. Diese Verstellung läßt sich einfach durchführen. Die Spindel 5 wird so weit verstellt, bis in der Positionsanzeige 10 der neue Wert 70 angezeigt wird. Dann hat der Flugkreis den erforderlichen Abstand h von 80 mm vom Anschlag 1. In der Positionsanzeige 9 wird weiterhin das Bearbeitungsmaß h von 80 mm angezeigt.

Auf diese Weise kann der Benutzer anhand der beiden Positionsanzeigen 9 und 10 des Anzeigegerätes 8 leicht feststellen, welches Bearbeitungsmaß h eingestellt ist und welchen Flugkreisradius das gerade eingesetzte Bearbeitungswerkzeug 4 hat.

Es ist in gleicher Weise sehr einfach möglich, auch das Bearbeitungsmaß h einzustellen. Soll es beispielsweise von 80 mm auf 60 mm verringert werden, dann muß die Spindel 5 um das Differenzmaß von 20 mm näher zum Anschlag 1 verstellt werden. Unabhängig davon, ob von der Einstellung gemäß Fig. 1 oder der Stellung gemäß Fig. 2 ausgegangen wird, wird in beiden Fällen zunächst mit dem Schalter 11 des Anzeigegerätes 8 die Positionsanzeige 9 eingestellt. Dann wird die Spindel 5 so weit in Pfeilrichtung 7 in Richtung auf den Anschlag 1 verstellt, bis in der Positionsanzeige 9 der neue Wert 60 erscheint. Dann ist das neue Bearbeitungsmaß h exakt eingestellt.

Befindet sich die Spindel 5 in der Einstellung gemäß Fig. 1, muß anschließend die Spindel um den Flugkreisradius des Werkzeuges wieder vom Anschlag 1 entfernt werden. Hierzu wird in der beschriebenen Weise der Schalter 11 umgestellt, so daß die Positionsanzeige 10 eingeschaltet wird. Die Spindel 5 wird dann so lange verschoben, bis in der Positionsanzeige 10 der Flugkreisradius des jeweils auf der Spindel 5 sitzenden Bearbeitungswerkzeuges angezeigt wird.

Befindet sich die Spindel 5 in der Stellung gemäß Fig. 2, dann ist eine weitere Verstellung der Spindel 5 nicht erforderlich.

Es ist selbstverständlich auch möglich, gleichzeitig das Bearbeitungsmaß h und einen neuen Flugkreisradius des Bearbeitungswerkzeuges einzustellen. Hierbei wird zunächst in der beschriebenen Weise das Bearbeitungsmaß h unter Zuhilfenahme der Positionsanzeige 9 eingestellt. Anschließend wird unter Zuhilfenahme der Positionsanzeige 10 der jeweilige Flugkreisradius des Werkzeuges durch Verstellen der Spindel 5 in der erforderlichen Richtung eingestellt. Selbstverständlich kann auch zunächst der Flugkreisradius und anschließend das Bearbeitungsmaß eingestellt werden.

Um Ungenauigkeiten infolge eines Lager- oder Spindelspieles zu vermeiden, sollte die Positioniereinrichtung der Spindel 5 immer in der gleichen Richtung erfolgen, unabhängig davon, ob mittels der Anzeige 9 oder der Anzeige 10 positioniert wird. Bei Holzbearbeitungsmaschinen werden die vertikalen Spindeln und die unteren Horizontalspindeln in bekannter Weise zum Holz hin positioniert, während die oberen Horizontalspindeln nach oben hin vom Holz weg positioniert werden.

Die Anzeigen können mechanische oder elektrische Anzeigen sein.

**Patentansprüche**

1. Verfahren zur Positionierung eines einen Bezugspunkt (6) aufweisenden Maschinenelementes (4) relativ zu eine Referenzpunkt (1), wobei das Maschinenelement (4) so in bezug auf den Referenzpunkt (1) eingestellt wird, daß ein wirksamer Teil (12) des Maschinenelementes (4) vom Referenzpunkt (1) einen vorgegebenen Abstand (h) hat, der in einer ersten Positionsanzeige (9) eines Anzeigegerätes (8) angezeigt wird, das mit einer zweiten Positionsanzeige (10) zur Anzeige eines Abstandes (r) des Bezugspunktes (6) des Maschinenelementes (4) von seinem wirksamen Teil (12) versehen ist,
dadurch gekennzeichnet,

daß zur Einstellung des Abstandes (r) die erste Positionsanzeige (9) abgeschaltet und die zweite Positionsanzeige (10) eingeschaltet wird,

daß das Maschinenelement (4) relativ zum Referenzpunkt (1) verschoben wird, bis in der zweiten Positionsanzeige (10) des Anzeigegerätes (8) dieser Abstand (r) angezeigt wird,

daß zur Einstellung des vorgegebenen Abstandes (h) die erste Positionsanzeige (9) eingeschaltet und die zweite Positionsanzeige (10) abgeschaltet wird,

und daß das Maschinenelement (4) so weit relativ zum Referenzpunkt (1) verstellt wird, bis in der ersten Positionsanzeige (9) des Anzeigegerätes (8) der vorgegebene Abstand (h) angezeigt wird.

2. Verfahren nach Anspruch 1,
dadurch gekennzeichnet, daß als Bezugspunkt (6) des Maschinenelementes (4) die Achse einer Spindel (5) verwendet wird.

3. Verfahren nach Anspruch 1 oder 2,
dadurch gekennzeichnet, daß als wirksamer Teil (12) des Maschinenelementes (4) der Flugkreis der Messer des Bearbeitungswerkzeuges verwendet wird.

4. Verfahren nach Anspruch 3,
dadurch gekennzeichnet, daß als Abstand (r) zwischen dem Bezugspunkt (6) und dem wirksamen Teil (12) des Maschinenelementes (4) der Flugkreisradius verwendet wird.

5. Verfahren nach einem der Ansprüche 1 bis 4,
dadurch gekennzeichnet, daß das Maschinenelement (4) bei seiner Verstellung wahlweise mit den Positionsanzeigen (9, 10) gekoppelt wird.

6. Verfahren nach einem der Ansprüche 1 bis 5,
dadurch gekennzeichnet, daß zur Umschaltung zwischen den beiden Positionsanzeigen (9, 10) ein Schalter (11) verwendet wird.

7. Verfahren nach einem der Ansprüche 1 bis 6,
dadurch gekennzeichnet, daß der in der ersten Positionsanzeige (9) angezeigte Wert exakt dem fertigen Werkstückmaß entspricht.

**Claims**

1. A method of positioning a machine element (4), comprising a datum point (6), relative to a reference point (1), wherein the machine element (4) is set in such a way with respect to the reference point (1) that an effective part (12) of the machine element (4) is at a pre-determined distance (**h**) from the reference point (1), the distance (**h**) being displayed in a first position display (9) of a display appliance (8) which is provided with a second position display (10) for displaying a distance (**r**) of the datum point (6) of the machine element (4) from its effective part (12),
**characterized in that,** in order to set the distance (**r**), the first position display (9) is switched off and the second position display (10) is switched on,

the machine element (4) is displaced relative to the reference point (1) until the said distance (**r**) is displayed in the second position display (10) of the display appliance (8),
in order to set the pre-determined distance (**h**), the first position display (9) is switched on and the second position display (10) is switched off, and
the machine element (4) is displaced so far relative to the reference point (1) until the pre-determined distance (**h**) is displayed in the first position display (9) of the display appliance (8).

2. A method according to Claim 1, **characterized in that** the axis of a spindle (5) is used as the datum point (6) of the machine element (4).

3. A method according to Claim 1 or 2, **characterized in that** the turning circle of the blades of the machining tool is used as the effective part (12) of the machine element (4).

4. A method according to Claim 3, **characterized in that** the turning circle is used as the distance (**r**) between the datum point (6) and the effective part (12) of the machine element (4).

5. A method according to one of Claims 1 to 4, **characterized in that** during its adjustment the machine element (4) is optionally coupled to the position displays (9, 10).

6. A method according to one of Claims 1 to 5, **characterized in that** a switch (11) is used to change between the two position displays (9, 10).

7. A method according to one of Claims 1 to 6, **characterized in that** the value displayed in the first position display (9) corresponds exactly to the finished workpiece dimension.

## Revendications

1. Procédé pour positionner un élément de machine (4) présentant un point relatif (6) par rapport à un point de référence (1), l'élément de machine (4) étant réglé de telle sorte par rapport au point de référence (1) qu'une partie efficace (12) de l'élément de machine (4) présente une distance prédéterminée (h) par rapport au point de référence (1), ladite distance étant affichée dans un premier affichage de position (9) d'un dispositif d'affichage (8) qui est pourvu d'un second affichage de position (10) pour afficher une distance (r) du point relatif (6) de l'élément de machine (4) par rapport à sa partie efficace (12),
caractérisé en ce que

   - pour régler la distance (r), on arrête le premier affichage de position (9) et on met en marche le second affichage de position (10),
   - l'élément de machine (4) est déplacé par rapport au point de référence (1), jusqu'à ce que cette distance (r) soit affichée dans le second affichage de position (10) du dispositif d'affichage (8),
   - pour régler la distance prédéterminée (h), on met en marche le premier affichage de position (9) et on arrête le second affichage de position (10),
   - et l'élément de machine (4) est déplacé aussi loin par rapport au point de référence (1) que la distance prédéterminée (h) est affichée dans le premier affichage de position (9) du dispositif d'affichage (8).

2. Procédé selon la revendication 1, caractérisé en ce que l'on utilise comme point relatif (6) de l'élément de machine (4) l'axe d'une broche (5).

3. Procédé selon l'une ou l'autre des revendications 1 et 2, caractérisé en ce que l'on utilise comme partie efficace (12) de l'élément de machine (4) la trajectoire des couteaux de l'outil d'usinage.

4. Procédé selon la revendication 3, caractérisé en ce que l'on utilise comme distance (r) entre le point relatif (6) et la partie efficace (12) de l'élément de machine (4) le rayon de trajectoire.

5. Procédé selon l'une quelconque des revendications 1 à 4, caractérisé en ce que l'élément de machine (4) est accouplé au choix aux affichages de position (9, 10) lors de son déplacement.

6. Procédé selon l'une quelconque des revendications 1 à 5, caractérisé en ce que pour la commutation entre les deux affichages de position (9, 10), on utilise un commutateur (11).

7. Procédé selon l'une quelconque des revendications 1 à 6, caractérisé en ce que la valeur affichée dans le premier affichage de position (9) correspond exactement à la valeur de la pièce finie.

# Fig.1

# Fig.2